# FASCICULE DE BREVET EUROPEEN

(11) **EP 0 599 681 B1**
(45) Date de publication et mention de la délivrance du brevet: **09.08.2000**
(21) Numéro de dépôt: 93402683.2
(22) Date de dépôt: 02.11.1993
(51) Int. Cl.: H04L 29/06

(54) **Outil de simulation d'un code de réseau**
Simulationsgerät für Netzwerkcode
Simulation tool for network code

(30) Priorité: 13.11.1992 FR 9213653
(43) Date de publication de la demande: 01.06.1994
(73) Titulaire: BULL S.A., 78430 Louveciennes (FR)
(72) Inventeur: Bonnet, Pascal, F-78380 Bougival (FR); Machet, François, F-91400 Orsay (FR); Martin, René, F-78110 Le Vesinet (FR)
(74) Mandataire: Colombe, Michel

(56) Documents cités:
- EP-A- 0 327 198
- WO-A-91/20032
- WO-A-92/15962
- US-A- 4 617 663
- COMPUTER DESIGN. vol. 21, no. 1 , Janvier 1982 , LITTLETON, MASSACHUSETTS US pages 175 - 179 D.E.WREGE 'HOSTED SOFTWARE FOR MICROCOMPUTERS'
- MICROPROCESSING AND MICROPROGRAMMING vol. 18, no. 1-5 , 1986 , AMSTERDAM NL pages 145 - 152 I.CHLAMTAC 'A CONCURRENT NETWORK SIMULATOR FOR AUTOMATED PROTOCOL DEVELOPMENT AND PERFORMANCE EVALUATION'

## Description

La présente invention concerne un *simulateur* d'un code de couches de communication d'un réseau qu'on appellera, pour simplifier, code de réseau (Networking code, en anglais) dans la suite du texte. Elle est notamment applicable à la simulation d'un code exécutable dans un processeur de système informatique gérant des échanges d'informations avec les différentes stations d'un réseau, ce réseau pouvant être par exemple un réseau de type FDDI (normalisé à l'ANSI, sous la référence X3T9-5 et à l'I.S. O., Organisation Internationale de normalisation).

On sait que les réseaux de communication sont constitués par une pluralité de terminaux ou stations reliés entre eux par une liaison de transmission comprenant un support de transmission qui peut être constitué par exemple par des fibres optiques, dans le cas d'un réseau de type FDDI. Un ordinateur relié à un tel réseau est considéré comme un terminal.

On sait que de nombreux réseaux téléinformatiques et télématiques modernes fonctionnent suivant un même modéle de référence connu sous le nom de modèle de référence OSI. D'autres réseaux peuvent également fonctionner sur d'autres modèles qui restent cependant voisins du modèle de référence OSI, en ce qui concerne la définition de l'architecture de ces réseaux sous forme de couches normalisées (il en est ainsi des réseaux TCP-IP, par exemple). Ainsi, dans le modèle OSI, l'architecture est constituée par l'empilement de sept couches d'activités, la couche la plus basse (couche 1) correspondant à la transmission physique des signaux entre les différents systèmes, au travers du support physique d'interconnexion (fibres optiques) alors que la couche supérieure (couche 7) correspond aux fonctions réalisées par les programmes d'application et les utilisateurs du réseau téléinformatique considéré.

Le modèle OSI définit également les concepts permettant de décrire le fonctionnement de chaque couche. On connaît, par ailleurs des mécanismes définissant les relations entre couches adjacentes, par exemple celui appelé 〈〈 STREAMS 〉〉 par la Société ATT et défini plus précisément dans des documents mentionnés dans la suite du texte.

La tendance du développement technologique des réseaux, l'utilisation de terminaux de plus en plus nombreux, conduisent à développer au sein même des ordinateurs, des processeurs de communication programmés, ce qui permet ainsi de réduire la charge de l'unité centrale de l'ordinateur en effectuant une partie de la gestion des communication de ce dernier avec les autres stations du réseau.

Par ailleurs, étant donné le développement extrêmement rapide des réseaux de communication ainsi que des systèmes informatiques, on est conduit à connecter à un même réseau des ordinateurs de type différents utilisant des systèmes d'exploitation (Operating System) différents.

Le but d'un processeur de communication, qu'on peut également appeler système de transmission de données ou dispositif passerelle de connexion est d'adapter les conditions de transmission des informations sur le bus d'un ordinateur, aux conditions de transmission sur le réseau, ces conditions de transmission étant totalement différentes. Par ailleurs, ce processeur de communication permet de faire dialoguer des systèmes d'exploitation d'ordinateurs différents entre eux. En particulier, il permet de faire dialoguer les différentes couches de communication du système d'exploitation d'un premier ordinateur avec les différentes couches de communication des systèmes d'exploitation d'autres ordinateurs connectés au même réseau.

Le processeur de communication doit donc comporter, au sein même de son système d'exploitation un code de couches de communication lui permettant de dialoguer tant avec le système d'exploitation de l'ordinateur auquel il est relié, qu'avec les autres ordinateurs connectés au réseau, par exemple de type FDDI.

On connait par exemple un tel processeur de communication, encore appelé système de transmission de données.

Un tel processeur de communication, appelé NCC, permet d'assurer la gestion du transfert des données entre un ordinateur HOST muni d'un bus interne PSB dont le système d'exploitation est désigné par OS, et un réseau RE, par exemple de type FDDI. Le bus PSB est par exemple un bus dit MULTIBUSII (marque déposée par la Société INTEL) normalisé suivant la norme IEEE1296 (Institute of Electrical and electronic engineers).

Le processeur de communication NCC comprend trois parties essentielles qui sont les suivantes :
- la première partie, appelée GPU (sigle anglais de General Purpose Unit) est par exemple du modèle décrit dans *le brevet français n° 2 679 352*. Cette partie est munie d'un système d'exploitation par exemple du type décrit dans *le brevet français n° 2 679 351*. Le but de cette partie GPU est d'assurer d'une part l'initialisation de l'ensemble du coupleur NCC et d'autre part d'assurer le dialogue avec l'ordinateur HOST par l'intermédiaire du bus PSB, en respectant les normes d'utilisation de ce bus et en se conformant à la nature du système d'exploitation OS de l'ordinateur HOST. Par ailleurs, la partie GPU assure le transfert physique des données entre le bus PSB et la seconde partie DEA, dite dispositif adaptateur qui est directement connectée au réseau RE. La fonction de cette partie DEA est décrite ci-dessous.
- la partie DEA est par exemple du type décrit, soit dans le brevet N° 2 650 412 dont le titre est "dispositif passerelle de connexion d'un bus d'ordinateur à un réseau fibre optique en forme d'anneau" pour la partie matérielle, soit dans *le brevet français n° 2 695 740*, pour ce qui concerne la partie logicielle. Cette partie DEA assure la transmission physique des données entre la partie GPU et le réseau RE, ainsi que la connexion physique au réseau.
- la troisième partie, appelée PPA est en fait un coprocesseur de communication destiné plus particulièrement à la gestion des différentes couches de télécommunication du modèle OSI, ou encore du modèle TCP-IP. Aussi bien en ce qui concerne le modèle OSI, que TCP-IP, la partie PPA assure la gestion des couches de communication C₄, C₃, C₂, c'est à dire, respectivement des couches de transport, de réseau, et de liaison de données.

Les couches de communication C₂ à C₄ communiquent entre elles par l'intermédiaire de fonctions primitives permettant à deux couches voisines de dialoguer entre elles. Ainsi les deux couches C₂ et C₃ communiquent entre elles par l'intermédiaire de l'ensemble de fonctions ST₂, alors que les couches C₃ et C₄ communiquent par l'intermédiaire de l'ensemble de fonctions ST₃. Par ailleurs C₄ communique avec le monde extérieur c'est à dire par exemple avec des applications externes par l'intermédiaire d'une interface SH.

Dans une forme de réalisation préférée dans l'invention, les ensembles de fonctions ST₂, ST₃, SH sont des fonctions connues dans la pratique courante sous le nom de STREAMS. Ces fonctions standard sont par exemple définies dans les documents suivants :
- Unix Système V Release 4 - STREAMS Programmer's Guide, ATT issue 1
- Unix System V Release 3.2 - STREAMS Programmer's guide, ATT (ISBN : 0-13-944810-1): 1989.

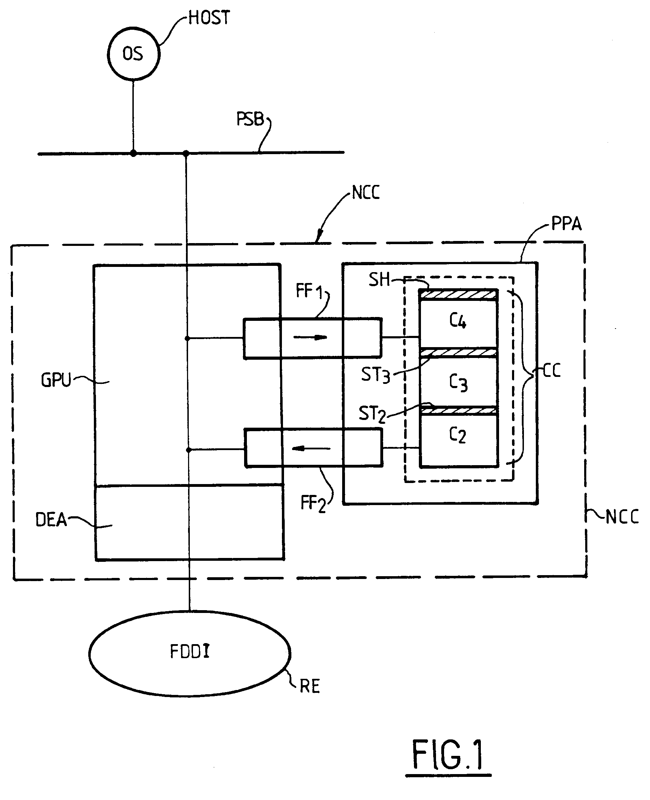

Dans l'exemple de réalisation montré à la figure 1, lorsque l'ordinateur HOST envoie un message vers le réseau RE, ou bien lorsqu'un message provient du réseau RE, celui-ci transite vers les couches C₂ à C₄, par l'intermédiaire d'une mémoire FiFo, à savoir FF₁, alors que ce message est transmis vers le dispositif adaptateur DEA, dans le premier cas ou vers GPU dans le second cas, depuis la partie PPA par l'intermédiaire de la mémoire FiFo, FF₂. Lorsqu'il s'agit d'établir une demande de connexion, provenant de l'ordinateur HOST, cette demande passe par l'intermédiaire de l'interface SH, alors que une fois la connexion établie, lorsqu'il s'agit d'envoyer des messages vers tout ou partie des stations connectées au réseau, ceux ci passent directement dans les couches C₄ à C₂.

L'ensemble constitué par les couches de communication C₂ à C₄ et par les différentes fonctions ST₂, ST₃ et SH, ainsi que par le système d'exploitation associé (celui de la partie PPA), constitue ce que l'on désigne par code de couches de communication CC, ou code de réseau ou encore noyau de communication.

Dans la pratique courante, lorsque l'on met au point des processeurs de communication tel que NCC, il est nécessaire d'attendre que le support matériel soit réalisé pour mettre au point le code de réseau, ce qui entraîne une perte de temps. La mise au point en est d'autant retardée.

On connaît des concepts de simulation de code. L'un de ceux-ci est décrit dans le document 〈〈Hosted software for microcomputers〉〉 de D. E. WREGE, publié en Janvier 1982, dans la revue COMPUTER DESIGN, VOL. 21, no. 1, aux pages 175-179.

Il consiste à développer une application destinée à un micro-ordinateur, sur un gros ordinateur. L'application est développée dans un langage évolué (high order language) ou encore langage de haut niveau. Ainsi, le metteur au point bénéficie de l'environnement puissant du gros ordinateur, de ses modules de mise au point et d'un compilateur croisé (cross-compiler) qui va retraduire l'application écrite en HOL, en langage propre au micro-ordinateur.

On connaît également des techniques de simulation de protocole. L'une de celles-ci est décrite dans l'article de I. CHLAMTAC, publié en 1986, dans la revue MICROPROCESSING AND MICROPROGRAMMING, vol. 18, no. 1-5, aux pages 145-152.

Elle consiste en un environnement de simulation qui utilise des modèles de protocole de communication à mettre au point. Cette simulation de modèle permet d'élaborer ou configurer un protocole. Il ne s'agit donc pas de la simulation d'un code de communication.

La présente invention permet de remédier à ces inconvénients en portant le noyau de communication CC sur un ordinateur extérieur et en considérant ce noyau comme une application pour le système d'exploitation de cette machine.

Selon l'invention, *le simulateur* d'un code de couches de communication d'accès à un réseau, est *celui défini par la revendication 1*

D'autres caractéristiques et avantages de la présente invention apparaîtront dans la description suivante donnée à titre d'exemple non limitatif et en se référant aux dessins annexés.

Sur ces dessins :
- La figure 1 rappelle ce que sont les différents éléments constitutifs essentiels d'un processeur de communication,
- La figure 2 montre les éléments constitutifs essentiels de l'outil de simulation selon l'invention,
- La figure 3 montre plus en détail un mode de réalisation de l'invention dont les éléments constitutifs essentiels montrés à la figure 2 sont relatifs à la mise au point d'un processeur de communication pouvant utiliser n'importe quel type de système d'exploitation,
- La figure 4 montre un mode de réalisation particulier de l'outil de simulation selon l'invention, applicable plus particulièrement à la mise au point du code CC de la partie PPA montrée à la figure 1.

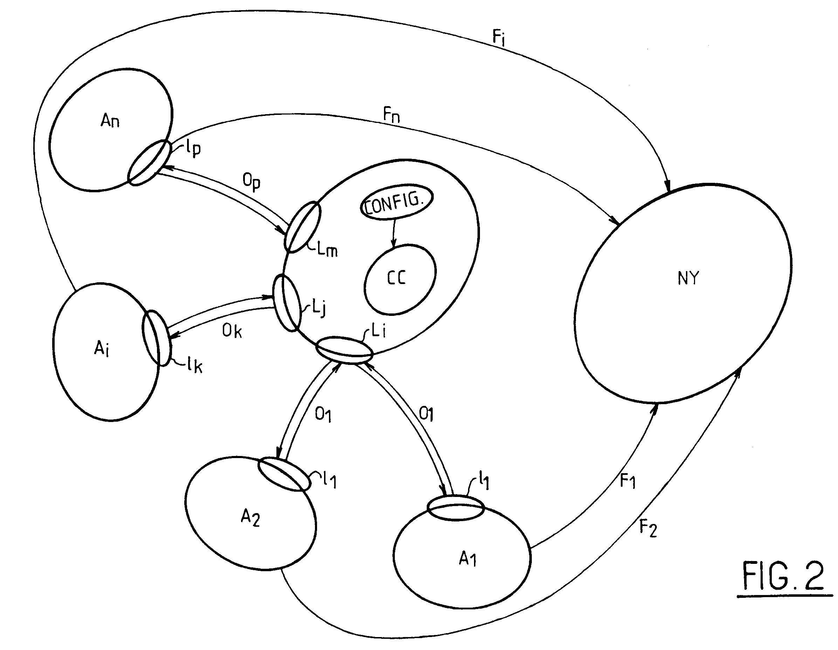

On se reporte à la figure 2 qui montre les éléments constitutifs essentiels *du simulateur (SIM)* selon l'invention. *Le simulateur est constitué par l'association d'une machine appelée ORD, d'un environnement de simulation à savoir ES et d'applications de test du code A1 à An. L'environnement de simulation* est porté sur une machine *ORD* destinée par exemple à la mise au point de logiciels de divers types, dont le système d'exploitation est désigné par NY. Dans un exemple de réalisation préféré de l'invention, aussi bien NY que ES fonctionnent sous système UNIX, défini par ATT, et désormais largement répandu.

L'environnement de simulation ES est considéré par NY comme une application et se situe par conséquent en dehors du système d'exploitation lui-même. Ainsi, si, lors de la mise au point de l'environnement de simulation ES, survient une erreur, celle-ci n'affecte que cette même application et par conséquent, la machine ORD peut continuer à tourner avec son système d'exploitation NY et rester disponible pour la mise au point d'autres applications.

L'environnement de simulation ES comprend un noyau central CC qui reproduit les couches de communication, par exemple C₂ à C₄ qui sont montrées à la figure 1. Ces couches de communication CC comportent exactement les mêmes lignes de code que celles qui figurent dans la partie PPA de la figure 1. La seule différence est que ces couches de communication sont compilées dans le langage interne propre à la machine ORD.

Les couches de communication incluses dans CC sont celles que veut simuler et tester l'utilisateur. Elles sont de type quelconque, par exemple de type OSI, ou TCP-IP, LAP-D, etc... Elles peuvent varier au cours du temps, puisque l'utilisateur peut avoir la nécessité de mettre au point des codes de réseau de divers types, suivant les besoins qu'il a à un moment déterminé. Bien entendu, à un même moment, le noyau CC peut contenir des couches de communication de types différents, ou n'en contenir aucune.

L'environnement ES comprend également un configurateur CONFIG destiné à mettre en route le noyau CC. Ce dernier peut communiquer avec les applications de test A₁, ..., Aᵢ,...Aₙ extérieures à ES par l'intermédiaire respectivement des librairies d'application L₁, Lⱼ,...Lₘ, appartenant elles aussi à ES, et des librairies l₁, lₖ,...lₚ appartenant à A₁, Aᵢ,...Aₙ.

L'ensemble de ces librairies (L₁ à Lₘ, l₁ à lₚ) contient des systèmes d'appel O₁, ...,Oₖ,....Oₚ, conformes au standard UNIX.

Le nombre m de librairies de ES (L₁ à Lₘ) est généralement différent du nombre p de librairies l₁ à lₚ lui même différent du nombre n d'applications A₁ à Aₙ.

En effet, plusieurs applications différentes telles que A₁ et A₂ à la figure 2 peuvent posséder des librairies identiques, ici l₁, communiquant avec la même librairie L₁, ce qui définit le système d'appel O₁.

A la figure 2, on a supposé que Aᵢ avait une librairie Lₖ communiquant avec Lⱼ, ce qui définit le système d'appel Oₖ, alors que Aₙ possède la librairie lₚ communiquant avec la librairie Lₘ, ce qui définit le système d'appel Oₚ.

Au cas où une application Aᵢ cherche à communiquer avec l'environnement de simulation ES par l'intermédiaire du système d'appel Oₖ, et qu'elle ne reçoit aucune réponse de la part de ES, alors l'appel est renvoyé sur le système d'exploitation central NY de la machine ORD, ainsi qu'en témoignent par exemple les flèches F₁, ..., Fᵢ,..., Fₙ, à la figure 2.

Ceci est le cas, par exemple, lorsque Aᵢ cherche à obtenir l'ouverture d'un fichier, ce que ne fait pas CC.

L'environnement de simulation ES offre un environnement pour les applications de test suivantes :
- les applications de test unitaire des interfaces de type STREAMS, le terme unitaire signifiant ici qu'on cherche à tester une interface STREAMS déterminée,
- les applications de test unitaire de couches de protocole de communication,le terme unitaire signifiant ici qu'on cherche à tester une couche déterminée,
- les applications de test d'un empilement de couches, autrement dit, les applications de simulation du fonctionnement d'un réseau.

L'environnement ES est configurable. Son noyau CC est lancé par le configurateur CONFIG. Il peut l'être sous le contrôle d'un débogueur (debugger), situé dans NY.

L'environnement ES fournit un accès dynamique à toutes les applications de test et rend la simulation transparente pour les différentes couches du noyau CC, puisqu'on ne touche ni à une seule ligne de code de ce dernier, ni à une ligne de chacune de ses applications.

Les applications de test peuvent être démarrées soit directement à partir d'un langage de commande UNIX, ce qui est représenté à la figure 2 par les différents systèmes d'appel O₁ à Oₚ, soit encore par un metteur au point d'application standard de type UNIX (débogueur quelconque, fourni par NY, sous UNIX, différent de celui mentionné ci-dessus).

L'exécution d'une simulation du code CC est appelée une session de simulation et chacune des applications de test peut se connecter dynamiquement à une session de simulation. Par ailleurs, plusieurs sessions de simulation peuvent coexister simultanément sur le même environnement ES.

Chacun des appels système O₁,...Oₖ,..Oₚ, est conforme à la sémantique d'un appel système STREAMS sous UNIX. En d'autres termes, on peut dire que l'on réalise une émulation des appels système UNIX sur l'environnement de simulation ES, ou encore que les applications A₁ à Aₙ communiquent avec l'environnement de simulation ES comme s'il s'agissait d'un véritable système UNIX.

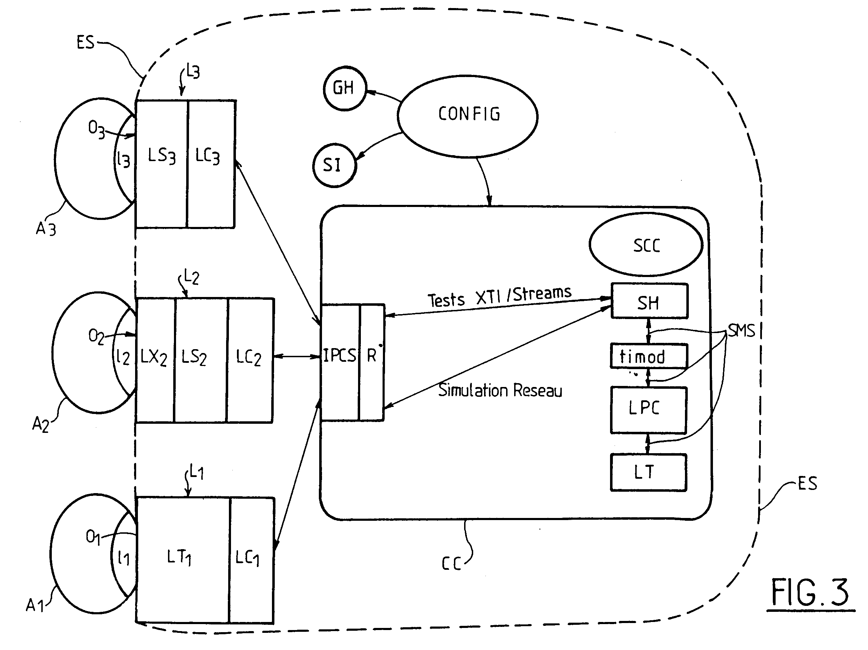

On se reporte à la figure 3 qui montre un premier exemple de réalisation de l'environnement de simulation ES montré à la figure 2. A cet égard, on suppose que l'on a affaire à trois applications A₁, A₂, A₃.

L'application A₁ est une application de simulation d'un réseau. Elle simule donc des messages provenant d'un réseau, messages conformes au protocole en application sur ce réseau.

L'application A₂ est une application de test pour le standard XTI défini par ATT. XTI est un standard d'interface entre une couche de niveau 4 (transport) et une application utilisateur quelconque (Process User).

L'application A₃ est une application de test utilisant les appels système standard STREAMS. On voit donc que ces applications sont, soit des applications écrites spécifiquement par l'utilisateur, par exemple l'application A₁, soit des applications standard UNIX, telles que les applications A₂ et A₃.

Les applications A₁ à A₃ peuvent accéder à une session de simulation par l'intermédiaire des librairies spécifiques, L₁, L₂ et L₃ appartenant à ES. On a supposé ici que A₁, A₂, A₃ possédaient respectivement les librairies l₁, l₂, l₃ associées respectivement aux système d'appels O₁, O₂, O₃ et aux librairies L₁, L₂, L₃ et ce, pour simplifier. Chacune de ces librairies fournit à l'application correspondante un ensemble de fonctions lui permettant de communiquer avec le noyau virtuel CC. Le dialogue des applications avec celui-ci est basé sur un mécanisme UNIX, à savoir un mécanisme IPC. A cet effet, chacune des librairies L₁ à L₃ comprend une sous-librairie, respectivement LC₁, LC₂ et LC₃, dites librairie client IPC. Ce mécanisme, transparent pour l'application permet à l'utilisateur de celle-ci d'identifier la session de simulation à laquelle il veut accéder. (On rappelle que plusieurs sessions peuvent avoir lieu simultanément pour un même noyau virtuel CC). La couche immédiatement supérieure au mécanisme IPC est une couche intermédiaire qui rend la couche basse de type IPC invisible pour l'application. A cet effet, les deux librairies L₂ et L₃ sont munies chacune respectivement d'une sous-librairie, à savoir LS₂ et LS₃ fournissant par exemple des tests spécifiques pour les interfaces STREAMS.

La librairie L₂ comprend de plus une sous-librairie LX₂ qui est spécifique des applications de test XTI. Par ailleurs, la librairie L₁ comprend une sous-librairie LT₁, dite librairie transparente qui contient les moyens d'accès vers l'environnement de simulation ES permettant de simuler des messages provenant d'un type de réseau particulier déterminé, que l'on cherche à simuler.

Le configurateur CONFIG déclenche l'exécution du noyau virtuel CC, que l'on cherche à simuler. Ce dernier est déclenché comme n'importe quelle application de type UNIX. Ce configurateur CONFIG déclenche par ailleurs des applications de service, à savoir le gestionnaire d'horloge GH, le gestionnaire d'interruption SI.

Le configurateur CONFIG lit ses directives à partir d'un fichier de configuration où sont indiquées toutes les opérations possibles que l'on désire lancer lors d'une session de simulation.

Le noyau virtuel CC comprend de plus un certain nombre de services, à savoir :
- les services de connexion d'application formés par le serveur IPCS (ou serveur de type IPC, défini dans UNIX) et un répartiteur R (dispatcher R), permettant à chaque application de trouver le point d'entrée vers la couche de communication de CC à laquelle elle désire accéder : en effet, suivant le type de couches de communication qu'on cherche à mettre au point, les points d'entrée sont différents.
- L'ensemble des services SCC qui fournissent le système d'exploitation de base du noyau CC.
- Des services simulant les services matériels qui sont ceux utilisés par le processeur de communication utilisant le code communication CC que l'on cherche à simuler. Ces services matériels peuvent être constitués par exemple par un gestionnaire d'interruption qui simule des interruptions matérielles, un gestionnaire d'horloge qui simule des fonctions de gestion de temps (timing functions), des services d'allocations de mémoire, ainsi que des services d'inhibition (inhibition services).
- des services SMS de mécanisme de type STREAMS définis dans les normes relatives à ces mêmes STREAMS.

Le noyau virtuel CC comporte en outre tout un ensemble d'éléments composant ce que l'on peut définir comme une architecture de type STREAMS, ces éléments étant :
- l'interface STREAMS SH qui est strictement analogue à l'interface SH de l'ensemble de couches de communication de la partie PPA de la figure 1.
- l'élément timod qui est un module STREAMS lié à XTI,
- l'ensemble LPC de modules de protocoles de communication que l'on cherche à tester, à un moment donné. A un autre moment, cet ensemble peut être de nature différentes (TCP-IP, ISO, LAP-D, etc.). Ces modules sont reliés ensemble suivant des ordres fournis dans un fichier de code en langage C2+ fournis par l'utilisateur. Ces différents modules ignorent de fait qu'ils sont exécutés dans un environnement de simulation. lls se comportent donc exactement comme s'ils étaient dans un environnement réel.
- Un ensemble LT de modules spécifiques de chacun des tests que l'on cherche à mettre en oeuvre. lls sont liés entre eux de la même façon que les modules de protocole LPC.

Les éléments énoncés ci-dessus communiquent entre eux (flèches en traits épais à la figure 3) par des services streams SMS (définis dans la norme). Ainsi SH communique avec timod, timod avec LPC et LT avec LPC, par ces services SMS.

Ainsi que l'on peut le voir à la figure 3, les échanges d'informations et les dialogues entre les différents éléments constituant l'environnement de simulation se font dans les deux sens, ce qui est illustré par l'ensemble des flèches à double sens qui relient respectivement L₃, L₂, L₁ à CC d'une part, et entre le répartiteur R et l'interface STREAMS SH d'autre part. On voit également que la communication entre chacune des applications A₁ à A₃, par l'intermédiaire des librairies l₁ à l₃, L₁ à L₃ et par le serveur IPCS et le répartiteur R passe par l'intermédiaire de l'interface STREAMS SH. Le dialogue entre SH et R se fait également dans les deux sens ainsi qu'il est illustré par les deux flèches à double sens qui sont à l'intérieur du noyau virtuel CC, flèches symbolisant les tests STREAMS et XTI d'une part et les tests de simulation de réseaux d'autre part.

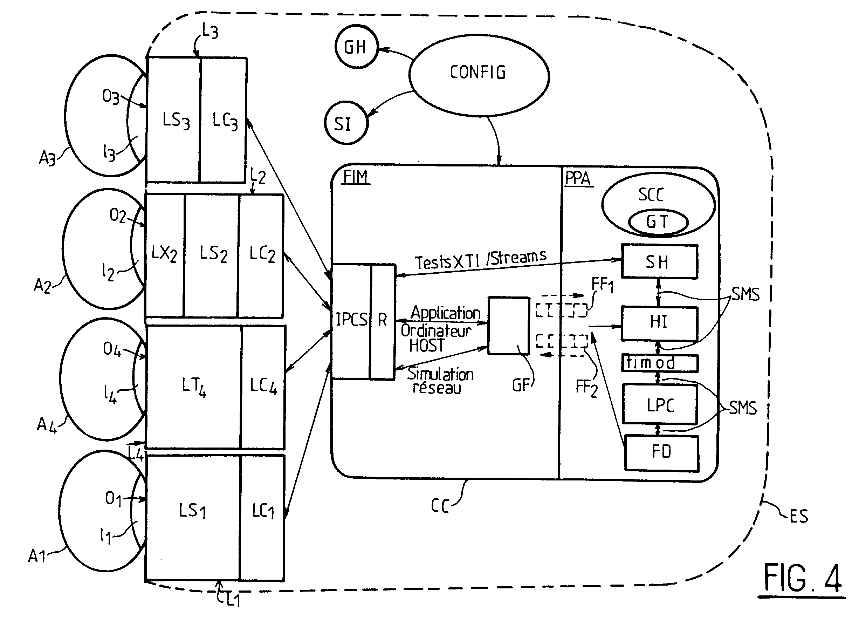

La figure 4 montre un exemple particulier de réalisation de la figure 3, plus particulièrement destinée à simuler le fonctionnement du code de communication de l'élément PPA de la figure 1.

La plupart des éléments constitutifs essentiels de la figure 3 se retrouvent dans la figure 4, à savoir les applications A₁ à A₃ avec leurs librairies correspondantes L₁ à L₃, ainsi que les éléments constitutifs essentiels du code de communication CC, à savoir le serveur IPCS, le répartiteur R, le service du noyau virtuel SCC, l'interface STREAMS SH, I'élément timod, l'ensemble LPC. L'environnement de simulation montré à la figure 4 comporte en plus une application A₄ , appelée application hôte, accompagnée des librairies qui lui sont associées à savoir sa propre librairie l4, d'une part et de L₄ pour ES composée d'une sous-librairie LC₄ analogue aux sous-librairies LC₁ à LC₃, et d'une librairie transparente LT₄ simulant les messages que l'ordinateur HOST peut envoyer au réseau RE, par l'intermédiaire des parties GPU, PPA et DEA montrées à la figure 1. Par ailleurs, le noyau virtuel CC comprend un gestionnaire de FiFo et les deux FiFo FF₁ et FF₂ qui simulent très exactement les FiFo FF₁ et FF₂ ayant la même dénomination à la figure 1. A la figure 4, le noyau virtuel CC comprend de plus une interface H₁ disposée entre l'interface STREAMS SH et l'élément timod.

Par ailleurs le noyau virtuel CC de la figure 4 comprend un logiciel d'écriture de FiFo, FD.

Les éléments SH, HI, tmod, LPC, FD communiquent respectivement entre eux par l'intermédiaire de services STREAMS, SMS analogues à ceux de la figure 3. Par ailleurs le logiciel d'écriture FiFo FD communique directement avec l'élément FiFo FF₂ alors que l'élément FF₁ communique directement avec l'interface hôte HI.

Les applications A₁ et A₄, communiquent avec le noyau virtuel CC par l'intermédiaire des librairies l₁ et l₄, L₁ et L₄, des éléments IPC et R (de la même manière que la figure 3) puis elles communiquent directement avec le gestionnaire de FiFo GF. Par contre, en ce qui concerne les applications A₂ et A₃, la façon dont elles communiquent avec le noyau virtuel CC est totalement identique à celle indiquée à la figure 3. Par conséquent, dans ce cas, le répartiteur R communique directement avec l'interface STREAMS SH.

Par ailleurs les services SCC du noyau virtuel comprennent en outre un gestionnaire de tâches GT qui comprend des fonctionnalités propres au système d'exploitation qui est réellement mis en oeuvre dans l'élément PPA. Dans l'exemple de réalisation qui est décrit ici, ces fonctionnalités appartiennent au logiciel de communication CNS mis au point par la demanderesse.

Les autres éléments CONFIG, GH, SI sont strictement identiques à ceux de la figure 3.

L'interface hôte HI est un multiplexeur dont le rôle est d'extraire des messages depuis la FiFo de lecture FF₁. Ces messages transportent des primitives d'un format spécifique à ce processeur NCC. Certains de ces messages sont dirigés soit à travers l'interface SH vers une tâche de type CNS en attente de connexion, soit dirigés vers les LPC.

Ainsi qu'il a été dit plus haut le logiciel d'écriture FD écrit des messages dans la FiFo d'écriture FF₂.

Les logiciels de protocole de communication LPC fonctionnent de la même manière qu'à la figure 3, ou sont chaînés par une tâche de configuration définie par des messages de configuration reçus de l'application A₄ lorsque celle-ci est simulée.

## Revendications

1. *Simulateur (SIM) d'un code de couches de communication (CC) d'un réseau RE exécutable dans tout processeur de système informatique (NCC) gérant des échanges d'informations entre les différents éléments du système relié par l'intermédiaire du réseau, caractérisé en ce qu'il comprend, en association :*
- *d'une part, un ordinateur (ORD) contenant un système d'exploitation (NY)*
- *d'autre part, un environnement de simulation (ES) qui constitue une application tournant sur l'ordinateur et qui reste extérieure au système d'exploitation (NY)*
- *des applications de test (A*_{*1*} *à A*_{*3*} *ou A*_{*n*}*) du code de communication (CC),*
*L'environnement (ES) comprenant :*
- *le code de couches de communication (CC),non modifié et compilé dans le langage interne de l'ordinateur (ORD), et considéré comme un noyau virtuel pour l'ordinateur (ORD,*
- *des moyens de configuration (CONFIG, SI, GH) destinés à déclencher l'exécution du code de communication*
- *une plurailté de m moyens d'accès (L1 à L*_{*3*} *ou L*_{*m*}*) au code (CC) pour toutes les applications de tests (A*_{*1*} *à A*_{*3*} *ou A*_{*n*}*) de ce dernier.*

2. *Simulateur (SIM)* selon la revendication 1 caractérisé en ce que chaque application comprend une librairie d'accès vers l'extérieur pouvant communiquer avec *l'un* des m *moyens d'accès* en définissant avec celle-ci un système d'appels, le nombre p de librairies d'application différentes étant égal ou inférieur au nombre m de moyens d'accès au code, plusieurs applications étant susceptibles d'avoir des librairies d'applications identiques, le nombre de système d'appel différents étant lui aussi égal à p.

3. *Simulateur (SIM)* selon la revendication 1 caractérisé en ce que les applications de test comprennent :
- des applications de test d'interfaces déterminées entre différentes couches de communication du réseau (A2, A3)
- des applications de test de chacune des couches de communication,
- des applications (A1) de test de l'empilement des couches de communication.

4. *Simulateur* selon la revendication 3, caractérisé en ce que *chaque moyen d'accès est une librairie d'accès*, chaque librairie d'accès au code (L1 à L3) *contenant* une première sous-librairie (LC₁, LC₂, LC₃) comprenant un mécanisme permettant à l'utilisateur *du simulateur* d'identifier la session de simulation à laquelle il veut accéder, plusieurs sessions de simulation pouvant coexister sur *le simulateur*, et une seconde sous-librairie contenant des tests spécifiques d'interfaces entre les dites couches de communication.

5. *Simulateur* selon la revendication 4 caractérisé en ce que toute librairie d'accès au code (L1) communiquant avec des applications de test d'empilement de couches (A1) contient des moyens d'accès au code permettant de simuler des messages provenant du réseau, contenus dans une sous-librairie.

6. *Simulateur* selon les revendications 2 et 3, caractérisé en ce que les appels systèmes sont conformes au système UNIX, les interfaces entre différentes couches *de communication étant de* type STREAMS.

## Claims

1. Simulator (SIM) for a communication layer code (CC) of a network RE executable in any computer system processor (NCC) managing information exchanges between the various members of the system connected via the network, characterised in that it comprises, in association:
- on the one hand, a computer (ORD) containing an operating system (NY)
- on the other hand, a simulation environment (ES) that constitutes an application running on the computer and that remains outside the operation system (NY)
- applications (A₁ to A₃ or Aₙ) for testing the communication code (CC), the environment (ES) comprising:
- the communication layer code (CC), unamended and compiled in the internal language of the computer (ORD), and considered to be a virtual kernel for the computer (ORD),
- configuration means (CONFIG, SI, GH) intended to trigger the execution of the communication code
- a plurality of m means (L₁ to L₃ or Lₘ) for access to the code (CC) for all the applications (A₁ to A₃ or Aₙ) for testing the latter.

2. Simulator (SIM) according to Claim 1 characterised in that each application comprises a library for access to the outside, which can communicate with one of the m access means while defining together with said library a call system, the number p of different application libraries being equal to or less than the number m of means of access to the code, several applications being capable of having identical application libraries, the number of different call systems also being equal to p.

3. Simulator (SIM) according to Claim 1 characterised in that the test applications comprise:
- applications for testing particular interfaces between different layers of communication in the network (A2, A3)
- applications for testing each of the communication layers,
- applications (A1) for testing the stack of communication layers.

4. Simulator according to Claim 3, characterised in that each access means is an access library, each code access library (L1 to L3) containing a first sub-library (LC₁, LC₂, LC₃) comprising a mechanism allowing the user of the simulator to identify the simulation session which he wants to access, it being possible for several simulation sessions to coexist on the simulator, and a second sub-library containing specific interface tests between said communication layers.

5. Simulator according to Claim 4 characterised in that any code access library (L1) communicating with layer stack test applications (A1) contains code access means making it possible to simulate messages coming from the network, contained in a sub-library.

6. Simulator according to Claims 2 and 3, characterised in that the system calls are in conformity with the UNIX system, the interfaces between different communication layers being of STREAMS type.

## Patentansprüche

1. Simulator (SIM) für einen Kommunikationsschichten-Code (CC) eines Netzes RE, der in jedem Datenverarbeitungssystem-Prozessor (NCC) ausführbar ist, der den Informationsaustausch zwischen verschiedenen Elementen des über das Netz verbundenen Systems steuert, dadurch gekennzeichnet, daß er zugeordnet enthält:
- einerseits einen Rechner (ORD), der ein Betriebssystem (NY) enthält,
- andererseits eine Simulationsumgebung (ES), die eine auf dem Rechner lautende Anwendung bildet und außerhalb des Betriebssystems (NY) bleibt,
- Testanwendungen (A₁ bis A₃ oder Aₙ) des Kommunikationscodes (CC),
wobei die Umgebung (ES) enthält:
- den Kommunikationsschichten-Code (CC), der nicht modifiziert und in die interne Sprache des Rechners (ORD) kompiliert ist und als virtueller Kern für den Rechner (ORD) angesehen wird,
- Konfigurationsmittel (CONFIG, SI, GH), die dazu bestimmt sind, die Ausführung des Kommunikationscodes zu starten,
- eine Mehrzahl von m Mitteln (L₁ bis L₃ oder Lₘ) für den Zugriff auf den Code (CC) für alle Testanwendungen (A₁ bis A₃ oder Aₙ) dieses letzteren.

2. Simulator (SIM) nach Anspruch 1, dadurch gekennzeichnet, daß jede Anwendung eine Bibliothek für den Zugriff nach außen umfaßt, die mit einem der m Zugriffsmittel kommunizieren kann, indem sie mit diesem ein Aufrufsystem definiert, wobei die Anzahl p unterschiedlicher Anwendungsbibliotheken gleich der oder kleiner als die Anzahl m der Code-Zugriffsmittel ist, wobei mehrere Anwendungen gleiche Anwendungsbibliotheken besitzen können, wobei die Anzahl unterschiedlicher Aufrufsysteme ebenfalls gleich p ist.

3. Simulator (SIM) nach Anspruch 1, dadurch gekennzeichnet, daß die Testanwendungen enthalten:
- Testanwendungen für Schnittstellen, die zwischen den verschiedenen Kommunikationsschichten (A₂, A₃) des Netzes bestimmt sind,
- Testanwendungen für jede der Kommunikationsschichten,
- Testanwendungen (A₁) für den Stapel aus Kommunikationsschichten.

4. Simulator nach Anspruch 3, dadurch gekennzeichnet, daß jedes Zugriffsmittel eine Zugriffsbibliothek ist, wobei jede Code-Zugriffsbibliothek (L₁ bis L₃) eine erste Unterbibliothek (LC₁, LC₂, LC₃) enthält, die einen Mechanismus umfaßt, der dem Anwender des Simulators ermöglicht, die Simulationssitzung zu identifizieren, auf die er zugreifen möchte, wobei mehrere Simulationssitzungen nebeneinander im Simulator vorhanden sein können, wobei jede Code-Zugriffsbibliothek (L₁ bis L₃) eine zweite Unterbibliothek enthält, die spezifische Tests an Schnittstellen zwischen diesen Kommunikationsschichten enthält.

5. Simulator nach Anspruch 4, dadurch gekennzeichnet, daß jede Code-Zugriffsbibliothek (L₁), die mit den Testanwendungen für den Schicht-Stapel (A₁) kommuniziert, Code-Zugriffsmittel enthält, die die Simulation von Nachrichten ermöglichen, die vom Netz stammen und in einer Unterbibliothek enthalten sind.

6. Simulator nach den Ansprüche 2 und 3, dadurch gekennzeichnet, daß die Systemaufrufe solche des UNIX-Systems sind, wobei die Schnittstellen zwischen den verschiedenen Kommunikationsschichten vom Typ STREAMS sind.
